**Europäisches Patentamt**

**European Patent Office**

**Office européen des brevets**

(19)

(11) Veröffentlichungsnummer: **0 225 497 B1**

(12) # EUROPÄISCHE PATENTSCHRIFT

(45) Veröffentlichungstag der Patentschrift: **16.10.91**

(51) Int. Cl.⁵: **G02F 2/00**

(21) Anmeldenummer: **86115587.7**

(22) Anmeldetag: **10.11.86**

(54) **Optischer Überlagerungsempfang.**

(30) Priorität: **13.11.85 DE 3540295**

(43) Veröffentlichungstag der Anmeldung:
**16.06.87 Patentblatt 87/25**

(45) Bekanntmachung des Hinweises auf die
Patenterteilung:
**16.10.91 Patentblatt 91/42**

(84) Benannte Vertragsstaaten:
**AT BE CH DE FR GB IT LI NL**

(56) Entgegenhaltungen:
**DE-A- 1 448 552**
**US-A- 3 215 840**
**US-A- 3 463 924**

**APPLIED OPTICS, Band 8, Nr. 11, November
1969, Seiten 2344,2345, New York, US; H. TA-
KASAKI et al.: "Polarization interferometer"**

**PATENTS ABSTRACTS OF JAPAN, Band 6,
Nr. 88 (P-118)[966], 26. Mai 1982 & JP-A-57 24
921**

(73) Patentinhaber: **SIEMENS AKTIENGESELL-
SCHAFT**
**Wittelsbacherplatz 2**
**W-8000 München 2(DE)**

(72) Erfinder: **Birth, Winfried, Dipl.-Ing.**
**Plankenhofstrasse 9a**
**W-8000 München 81(DE)**

EP 0 225 497 B1

**Beschreibung**

Die Erfindung betrifft ein Verfahren zum optischen Überlagerungsempfang entsprechend dem Oberbegriff des Anspruchs 1 sowie einen entsprechenden Empfänger.

Bei elektrischen Wellen ist der Überlagerungsempfang allgemein bekannt und üblich. Es ist auch bereits bekannt, in Analogie zum elektrischen Überlagerungsempfang einen optischen Überlagerungsempfänger aufzubauen, in dem kohärentes Empfangslicht mit dem in einem lokalen Laser erzeugten Licht überlagert und zusammen einem nachgeschalteten fotoelektrischen Wandler als Empfangselement zugeführt wird. Voraussetzung bei der Überlagerung ist dabei, daß die Polarisation des überlagerten Lichtes und des empfangenen Lichtes wenigstens annähernd übereinstimmt. Unter der Voraussetzung, daß das über eine Monomode-Glasfaser übertragene Licht näherungsweise linear polarisiert ist, wird empfangsseitig ebenfalls wenigstens näherungsweise linear polarisiertes Licht überlagert. Problematisch ist dabei, daß die Polarisation des auf einer Monomode-Glasfaser übertragenen Lichtes zeitlich instabil ist, also im Empfänger Polarisationsdifferenzen ausgeregelt werden müssen. Eine derartige Polarisationsregelung muß automaisch arbeiten und erfordert deshalb einen hohen Aufwand, außerdem können als Stellglieder optische Elemente notwendig werden, die das Empfangslicht dämpfen und dadurch dessen Signal-Geräuschabstand verschlechtern.

Aus der US-A 3 215 840 ist ein optischer Heterodyn-Empfänger mit lichtelektrischer Wandlung bekannt, der für einen spiegelfrequenzsicheren Empfang von Lichtsignalen mit Einseitenbandmodulation vorgesehen ist. Der Empfänger enthält zwischen Eingangsanschlüssen für das Licht das lokalen Oszillators oder das Eingangslicht sowie einer Strahlteileranordnung zwischengeschaltete lineare oder zirkulare Polarisatoren. Im Anschluß an die Strahlteileranordnung und damit im Lichtweg unmittelbar vor dem fotoelektrischen Wandler sind lineare Polarisatoren angeordnet, so daß nur linear polarisiertes Licht auf die fotoelektrischen Wandler trifft.

Die Aufgabe bei der vorliegenden Erfindung besteht also darin, eine einfache Möglichkeit für optischen Überlagerungsempfang zu schaffen.

Erfindungsgemäß wird die Aufgabe dadurch gelöst, daß das lokal erzeugte Licht, welches in den wandler eintrifft zirkular polarisiert ist.

Die erfindungsgemäße Lösung ist in vorteilhafter Weise verblüffend einfach und wenig aufwendig, da eine Polarisationsregelung vollkommen entfallen kann. Als weiterer Vorteil ergibt sich die Möglichkeit des optimalen Empfangs von zirkular polarisiertem Licht. Es ist zweckmäßig, daß bei Empfang von zirkular polarisiertem Licht die Polarisation des örtlich erzeugten zirkular polarisierten Lichtes den gleichen Drehsinn wie die des Empfangslichtes aufweist.

Eine Möglichkeit zur Erzeugung von zirkular polarisierten Licht besteht dabei darin, daß das lokal erzeugte Licht aus zwei linear polarisierten Komponenten besteht, daß die zweite Komponente phasenmäßig um etwa 90° verschoben ist und daß die Polarisationsebene des zweiten Lichtes um etwa 90° gegenüber der Polarisationsebene des ersten Lichtes verdreht ist.

Im Patentanspruch 4 ist ein optischer Überlagerungsempfänger beschrieben, mit dem das anspruchsgemäße Verfahren in einfacher Weise durchgeführt werden kann.

Die Erfindung soll im folgenden anhand der Zeichnung näher erläutert werden.

In der Zeichnung zeigt

Fig. 1     das Blockschaltbild eines erfindungsgemäßen Überlagerungsempfängers und

Fig. 2     die Lichtleistung in Abhängigkeit von der Phasendifferenz zweier Empfangslichtkomponenten.

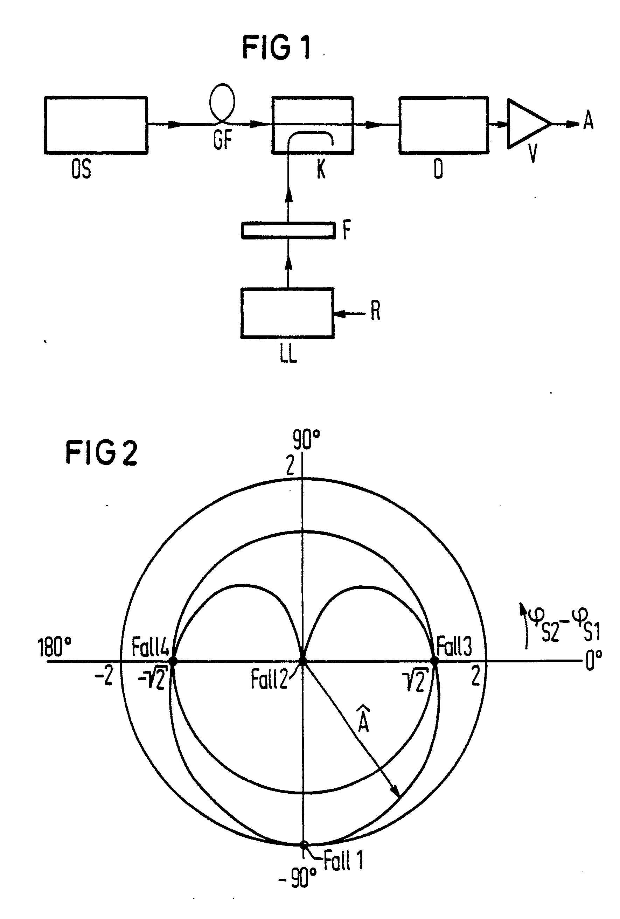

In der Fig. 1 ist mit OS der optische Sender bezeichnet, der die Sendeseite des optischen Übertragungssystems darstellt und das erzeugte Nutzlicht an eine Glasfaser GF abgibt.

Mit dem empfangsseitigen Ende der Glasfaser GF ist ein optischer Eingang eines Kopplers K verbunden, in dem das Empfangslicht mit lokal erzeugtem kohärentem Licht überlagert wird. Ein lokaler Laser LL erzeugt dieses Licht und gibt es über ein zirkular polarisierendes Filter F an einen zweiten optischen Eingang des Kopplers K ab. Wie in der Zeichnung angedeutet, kann es sich beim Koppler K um eine bekannte Anordnung handeln, bei der zwei Glasfasern in optischen Kontakt gebracht sind. Die überlagerten Lichtsignale werden vom Ausgang des Kopplers K an den Eingang eines lichtelektrischen Wandlers D abgegeben, bei dem es sich wahlweise um eine PIN-Fotodiode oder um eine Avalance-Fotodiode handelt. Das vom lichtelektrischen Wandler erzeugte elektrische Signal wird über einen Verstärker V an einen Ausgang A abgegeben und steht dort zur weiteren Auswertung zur Verfügung.

Die Funktion der in der Fig. 1 dargestellten Empfangsseite, also des lichtoptischen Empfängers ist von der Art des Empfangslichtes und des lokalerzeugten Lichtes abhängig, so daß unterschiedliche Funktionen möglich sind. Zunächst wird vorausgesetzt, daß das Empfangslicht linear polarisiert ist, bei Empfangslicht mit mehreren unterschiedlich polarisierten Komponenten wird also zunächst nur die linear polarisierte

EP 0 225 497 B1

Lichtkomponente $S_{S1}$ betrachtet. Zur Überlagerung wird zunächst entsprechend dem Stand der Technik lokal erzeugtes Licht $S_{oa}$ verwendet, das ebenfalls linear polarisiert ist, gegenüber dem Empfangslicht aber den Polarisationsfehlerwinkel $\alpha$ besitzt. Für die nutzbare Zwischenfrequenzkomponente mit der Frequenz $f_{ZF}$ ergibt sich dann ein zeitlicher Licht-Energieverlauf:

$$S_{aZF}(t) = 2\sqrt{S_{oa}\,S_{S1}} \cdot \cos\alpha \cdot \cos(\omega_{ZF}t + \varphi_o - \varphi_{S1}) \qquad (1)$$

wobei $\phi_O$ und $\phi_{S1}$ die Phasenlagen der linear polarisierten Komponente des lokal erzeugten Lichtes $S_{oa}$ und der linear polarisierten Komponente $S_{S1}$ des Empfangslichtes sind. Bedingt durch den Faktor $\cos\alpha$ in Gl. (1) ist die Leistung der nutzbaren Zwischenfrequenzkomponente vom Polarisationsfehlerwinkel abhängig und damit auch der Signal-Stör-Abstand.

Zirkular polarisiertes Licht kann als Licht angesehen werden, das aus zwei Komponenten besteht, wobei die zeitliche Phasenlage der zweiten Komponente $S_{ob}$ um $\pm 90°$ gegenüber der Phasenlage der ersten Komponente $S_{oa}$ verschoben ist, also z.B.

$$\phi_{ob} = \phi_o - 90° \qquad (2)$$

und die Polarisationsebene der zweiten Komponente senkrecht zu der der ersten Komponente steht, also z.B.

$$\phi_b = \alpha + 90° \qquad (3)$$

ist. Als zeitlicher Energieverlauf ergibt sich dann mit dieser zweiten Komponente wiederum unter der Voraussetzung von senkrechten Lichteinfall,

$$\frac{S_{1ZF}(t)}{2\sqrt{S_o\,S_{21}}} = \cos(\omega_{ZF}t + \varphi_o - \varphi_{S1} + \alpha) = A_1(t) \qquad (4)$$

mit $S_o = S_{oa} + S_{ob}$

Weil nun in Gl. (4) der Faktor $\cos\alpha$ fehlt, ist erkennbar, daß bei der erfindungsgemäßen Überlagerung des Empfangslichtes mit zirkular polarisiertem Licht bei freier Wahl des Drehsinns der zeitliche Energieverlauf nicht mehr vom Polarisationsfehlerwinkel $\alpha$ abhängig ist,
eine Polarisationsregelung damit überflüssig ist.

Es besteht weiterhin die Möglichkeit, daß neben dem Laserlicht auch das Empfangslicht eine zweite Komponente $S_{S2}$ aufweist, deren Polarisationsebene um $90°$ gedreht ist. Der zeitliche Energieverlauf der nutzbaren Zwischenfrequenzkomponente ist dann

$$\frac{S_{2ZF}(t)}{2\sqrt{S_o\,S_{S2}}} = \sin(\omega_{ZF}t + \varphi_o - \varphi_{S2} + \alpha) = A_2(t) \qquad (5)$$

Unter der Voraussetzung, daß die beiden Komponenten $S_{S1}$, $S_{S2}$ des Empfangslichtes etwa gleiche Leistung $S_S$ aufweisen, ergibt sich als Summe beider Komponenten

$$A(t) = 2\sqrt{\frac{S_{1ZF}(t) + S_{2ZF}(t)}{S_o\,S_s}} = \cos(\omega_{ZF}t + \varphi_o - \varphi_{S1} + \alpha) + \sin(\omega_{ZF}t + \varphi_o - \varphi_{S2} + \alpha) \qquad (6)$$

Da in der Praxis Empfangslichtkomponenten gleicher Leistung auftreten können, ist diese Möglichkeit in der Fig. 2 für verschiedene Phasenlagen der beiden Komponenten dargestellt. Im ersten Fall ist

3

$$\phi_{S2} = \phi_{S1} + 90^° \qquad (7),$$

sowohl das Empfangslicht als auch das überlagerte Licht sind gleichsinnig zirkular polarisiert, es ergibt sich ein Empfangspegel $\hat{A}$, der um 6 dB größer ist als nach Gl. (4).

Für den Fall 2 sei angenommen, daß

$$\phi_{S2} = \phi_{S1} - 90^° \qquad (8),$$

daß also der Drehsinn der Signale gegensinnig ist. Nur für diesen Sonderfall wird der Pegel des Zwischenfrequenzsignals zu Null.

Beim Fall 3 sind $\phi_{S2}$ und $\phi_{S1}$ gleich, die beiden Komponenten sind also zu einem linear polarisierten Licht zusammenfaßbar. Der Pegel der Zwischenfrequenz steigt damit um 3 dB gegenüber Gl. (4).

Im Falle 4 ist $\phi_{S2}$ gegen $\phi_{S1}$ um $180^°$ verschoben, wie im Falle 3 können auch hier beide Komponenten des Empfangslichtes zu einem linear polarisierten Licht zusammengefaßt werden und der Pegel $\hat{A}$ des Zwischenfrequenzsignals steigt ebenfalls um 3 dB.

Zum Fall 1 ist zu bemerken, daß das zirkular polarisierte lokale Laserlicht die doppelte Leistung aufweist und deshalb im fotoelektrischen Wandler ein um 3 dB größeres Schrotrauschen erzeugt, so daß vom Pegelgewinn von 6dB noch 3 dB übrigbleiben um die sich das Signal-Geräuschverhältnis verbessert, verglichen mit einer Anordnung, in der nur linear polarisiertes Licht überlagert ist. Wie in der Fig. 2 dargestellt, ist dieses Optimum vergleichsweise flach ausgeprägt und dadurch über einen größeren Winkelbereich praktisch erreichbar. Im besonderen Falle 2, bei dem eine Auslöschung des Zwischenfrequenzsignals möglich ist, weil das Empfangslicht zufällig genau gegensinnig zirkular polarisiert zum lokal erzeugten Licht ist, tritt dem gegenüber ein sehr spitzes Minimum auf. Damit ist aber in der Praxis nur selten eine Auslöschung des Zwischenfrequenzsignals zu erwarten, da schon bei geringen Abweichungen, wie aus der Fig. 2 erkennbar, ein auswertbares Zwischenfrequenzsignal auftritt. Wie aus der Fig. 2 erkennbar ist, kann durch Umschaltung des Drehsinns des überlagerten Lichtes, also des lokal erzeugten Lichtes der Fall 2 in den Fall 1, also in das Optimum übergeführt werden. Abgesehen von den Fällen 3 und 4, bei denen das Empfangslicht linear polarisiert ist, kann man also davon ausgehen, daß das Empfangslicht in der Regel rechts- oder linksdrehend elliptisch polarisiert auftritt, oder sogar stabil zirkular, wenn man eine geeignet tordierte Monomodefaser für die Übertragung des Nutzlichtes einsetzt.

Zur Übertragung zwischen Satelliten ist zirkular polarisiertes Licht vorteilhaft, weil man auch hier die Polarisationsregelung einsparen kann mit ihren die Empfangslichtleistung dämpfenden Einrichtungen, oder aber eine Positionsebenenstabilisierung der kompletten Satelliten.

**Patentansprüche**

1. Verfahren zum Empfang von kohärentem Licht durch Überlagerung mit lokal erzeugtem kohärenten Licht und lichtelektrischer Wandlung durch einen Wandler (D),
   **dadurch gekennzeichnet,**
   daß das lokal erzeugte Licht, welches in den Wandler (D) eintrifft, zirkular polarisiert ist.

2. Verfahren nach Anspruch 1,
   **dadurch gekennzeichnet,**
   daß bei Empfang von Licht mit linearer oder elliptischer Polarisation die Polarisation des örtlich erzeugten zirkular polarisierten Lichtes am Wandler den gleichen Drehsinn wie die des Empfangslichtes aufweist.

3. Verfahren nach Ansprüchen 1 oder 2,
   **dadurch gekennzeichnet,**
   daß das lokal erzeugte Licht aus zwei linear polarisierten Komponenten besteht, daß die zweite Komponente phasenmäßig um etwa $\pm 90^°$ gegenüber der ersten Komponente verschoben ist und daß die Polarisationsebene der zweiten Komponente um etwa $90^°$ gegenüber der Polarisationsebene der ersten Komponente verdreht ist.

4. Optischer Überlagerungsempfänger zur Durchführung eines Verfahrens nach Ansprüchen 1 bis 3 mit einem optischen Eingang für das kohärente Empfangslicht, mit einem lokalen Laser (LL) zur Erzeugung von lokal erzeugtem kohärenten Licht, sowie mit einem photoelektrischen Wandler (D),

**dadurch gekennzeichnet,**

daß im Lichtweg zwischen dem lokalen Laser (LL) und dem photoelektrischen Wandler (D) ein Filter (F) angeordnet ist, welches das vom lokalen Laser (LL) auf den photoelektrischen Wandler (D) einfallende Licht zirkular polarisiert, wobei gegebenenfalls eine Linse vor dem Wandler (D) angeordnet ist.

5.   Optischer Überlagerungsempfänger nach Anspruch 4,
**gekennzeichnet durch**
eine an den optischen Eingang angeschlossene, dem Wandler (D) vorgeschaltete optische Koppeleinrichtung (K), durch die das Empfangslicht und das lokal erzeugte Licht nach dem Filter (F) überlagert werden, und gekennzeichnet dadurch daß der optische Eingang an eine Monomodefaser (GF) angeschlossen ist.

6.   Optischer Überlagerungsempfänger nach Anspruch 4 oder 5,
**dadurch gekennzeichnet,**
daß das Filter (F) wahlweise rechts- oder linksdrehend polarisiert.

7.   Optischer Überlagerungsempfänger nach Anspruch 5,
**dadurch gekennzeichnet,**
daß die Monomodefaser (GF) in ihrer Länge tordiert ist.

8.   Optischer Überlagerungsempfänger nach Anspruch 4, 5 und 6,
**dadurch gekennzeichnet,**
daß das Empfangslicht und das lokal erzeugte, nach dem Filter (F) zirkular polarisierte Licht zusammen in einem spitzen Winkel auf den Wandler (D) geführt sind.

**Claims**

1.   Method for receiving coherent light by heterodyning using locally generated coherent light and photoelectric conversion by a transducer (D), characterised in that the locally generated light which enters the transducer (D) is circularly polarised.

2.   Method according to Claim 1, characterised in that in the case of reception of light having linear or elliptical polarisation, the polarisation of the locally generated circularly polarised light at the transducer has the same sense of rotation as that of the received light.

3.   Method according to Claims 1 or 2, characterised in that the locally generated light consists of two linearly polarised components, in that the second component is displaced in phase by approximately $\pm$ $90^\circ$ with respect to the first component, and in that the plane of polarisation of the second component is rotated by approximately $90^\circ$ with respect to the plane of polarisation of the first component.

4.   Optical heterodyne receiver for carrying out a method according to Claims 1 to 3, having an optical input for the coherent received light, a local laser (LL) for generating locally generated coherent light, and a photoelectric transducer (D), characterised in that a filter (F), which circularly polarises the light incident from the local laser (LL) on the photoelectric transducer (D), is arranged in the light path between the local laser (LL) and the photoelectric transducer (D), a lens being arranged before the transducer (D), if necessary.

5.   Optical heterodyne receiver according to Claim 4, characterised by an optical coupling device (K), which is connected to the optical input upstream of the transducer (D), and by means of which the received light and the locally generated light are heterodyned after the filter (F), and characterised in that the optical input is connected to a monomode fibre (GF).

6.   Optical heterodyne receiver according to Claim 4 or 5, characterised in that the filter (F) is optionally polarised clockwise or anti-clockwise.

7.   Optical heterodyne receiver according to Claim 5, characterised in that the monomode fibre (GF) is twisted along its length.

8. Optical heterodyne receiver according to Claims 4, 5 and 6, characterised in that the received light and the locally generated light which is circularly polarised after the filter (F) are led together at an acute angle onto the transducer (D).

**Revendications**

1. Procédé de réception d'une lumière cohérente par superposition d'une lumière cohérente produite localement et conversion photoélectrique au moyen d'un convertisseur (D), caractérisé par le fait que la lumière produite localement, qui pénètre dans le transducteur (D), est polarisée circulairement.

2. Procédé suivant la revendication 1, caractérisé par le fait que, dans le cas de la réception d'une lumière possédant une polarisation linéaire ou elliptique, la polarisation de la lumière polarisée circulairement, produite localement dans le convertisseur, possède le même sens de rotation que celui de la lumière reçue.

3. Procédé suivant la revendication 1 ou 2, caractérisé par le fait que la lumière produite localement est constituée de deux composantes polarisées linéairement, que la seconde composante est déphasée d'environ $\pm 90°$ par rapport à la première composante et que le plan de polarisation de la seconde composante est déphasé d'environ $90°$ par rapport au plan de polarisation de la première composante.

4. Récepteur optique superhétérodyne pour la mise en oeuvre d'un procédé suivant les revendications 1 à 3, comportant une entrée optique pour la lumière cohérente reçue, un laser local (LL) pour produire une lumière cohérente produite localement, ainsi qu'un convertisseur photoélectrique (D), caractérisé par le fait que dans le trajet de la lumière entre le laser local (LL) et le convertisseur photoélectrique (D) est disposé un filtre (F), qui polarise circulairement la lumière envoyée par le laser local (LL) sur le convertisseur photoélectrique (D), une lentille étant éventuellement disposée devant le convertisseur (D).

5. Récepteur optique superhétérodyne suivant la revendication 4, caractérisé par un dispositif de couplage optique (K), qui est relié à l'entrée optique et est branché en amont du convertisseur (D) et au moyen duquel la lumière reçue et la lumière produite localement sont superposées en aval du filtre (F), et caractérisé par le fait que l'entrée optique est raccordée à une fibre monomode (GF).

6. Récepteur optique superhétérodyne suivant la revendication 4 ou 5, caractérisé par le fait que le filtre (F) est polarisé au choix dans le sens tournant à droite ou à gauche.

7. Récepteur optique superhétérodyne suivant la revendication 5, caractérisé par le fait que la fibre monomode (GF) est torsadée sur sa longueur.

8. Récepteur optique superhétérodyne suivant les revendications 4,5 et 6, caractérisé par le fait que la lumière reçue et la lumière produite localement et polarisée circulairement en aval du filtre (S) sont envoyées conjointement, sous un angle aigu, sur le convertisseur (D).

# FIG 1

# FIG 2